# EUROPEAN PATENT APPLICATION

(11) **EP 1 607 424 A1**
(43) Date of publication of application: **21.12.2005**
(21) Application number: 05011898.3
(22) Date of filing: 02.06.2005
(51) Int. Cl.: C08G 18/42, C09D 175/04

(54) **A method of direct-to-metal coating**

(30) Priority: 14.06.2004 US 867146
(71) Applicant: Bayer MaterialScience LLC, Pittsburgh PA 15205 (US)
(72) Inventor: Yu, Poli C., Pudong-Shanghai 201206, CN (US); Roesler, Richard, R., Wexford, PA 15090 (US); Wei, Kei-Yi, Wexford, PA 15090 (US); Horgan, Sylvie S., Slippery Rock, PA 16057 (US)
(74) Representative: Bailly, Peter

(57) **Abstract**

A two-component coating composition that includes (A) a first component containing an acid functional aliphatic polyester polyol having an acid number of at least 20 mg KOH/g and a hydroxyl number of from 50 to 500 mg KOH/g, and (B) a second component comprising one or more polyisocyanates can be used to direct-to-metal coat metal substrates by (i) mixing components (A) and (B) in the above-described composition to form a mixture; and (ii) applying the mixture to a surface of a metal substrate.

## Description

### BACKGROUND OF THE INVENTION

### 1. FIELD OF THE INVENTION

The present invention relates to a method of direct-to-metal coating using two-component coating compositions containing polyols and polyisocyanates as well as to metal substrates coated with such compositions.

### 2. DESCRIPTION OF THE PRIOR ART

Two-component coating compositions containing a polyisocyanate component and an isocyanate-reactive component, typically a polyhydroxyl compound, are known and can be used to coat a variety of substrates. One of the deficiencies of these coatings is that they do not possess adequate adhesion, which is a critical requirement when the coatings are applied to metal substrates.

High acid number polyester resins are known in the art. Such resins have been typically cured using epoxy or melamine containing resins. Additionally, high acid number polyesters have been developed for water reducible formulations. Such formulations have been used in two-component water-borne polyurethane coatings.

When high performance coatings are needed, known polyurethane coatings have the ability to be rapidly cured, but do not always provide the adhesion necessary for many applications.

U.S. Patent No. 4,341,689 discloses a two component polyurethane coating system including as a first component a solution of a soluble resin containing active hydrogen atoms capable of reacting with isocyanate functionality, and dispersed therein an amine catalyst for the reaction absorbed in a molecular sieve. The second component includes a solution of an organic polyisocyanate and an organotin accelerator.

U.S. Patent No. 4,885,324 discloses a coating for metallic or polymeric composite substrates that performs both as a primer and as a topcoat. The coating contains a two component aliphatic polyurethane binder.

U.S. Patent Nos. 5,034,452 and 5,157,073 discloses non-aqueous coatings produced by combining a carboxyl functional polymer with zinc carbonate. Upon heat curing the applied film, the zinc cation clusters with the carboxyl polymer to produce a thermoset coating film.

U.S. Patent No. 5,124,385 discloses a corrosion-resistant coating including a polymeric polyurethane binder and a combination of metal salts or pigments.

U.S. Patent No. 5,372,875 discloses a process for preparing an aqueous two-component polyurethane-forming composition by a) dispersing in water a polyisocyanate which has an isocyanate content of at least 12% by weight and b) blending with water either before, during or after dispersing the polyisocyanate, a polyhydroxyl compound which i) has a molecular weight of 62 to 10,000, ii) contains at least two hydroxyl groups, iii) is water soluble or water dispersible, iv) does not contain urea or urethane groups and v) is selected from polyesters, polylactones, polycarbonates, polyethers, polythioethers, polyacetals, polyether esters, polyester amides and polyamides.

U.S. Patent No. 5,387,642 discloses an aqueous binder composition containing A) an aqueous solution or dispersion of an organic polyol component which can be diluted with water and contains at least one polyester resin containing urethane, carboxylate and hydroxyl groups and B) a polyisocyanate component which has a viscosity of 50 to 10,000 mPa.s at 23°C and contains at least one organic polyisocyanate which is present as an emulsion in component A).

U.S. Patent No. 6,610,812 discloses a golf ball comprising a core and a cover, wherein the core or the cover is formed from a composition comprising at least one acid functional polyurethane, polyurea, or copolymer thereof.

U.S. Patent No. 6,624,240 discloses a polyurethane resin prepared by reacting a diisocyanate compound with at least one monomer diol compound and optionally a polymer diol compound without a chain extender to form a polymer.

U.S. Patent No. 6,485,549 discloses a corrosion resistant coating to protect metallic and polymeric composite surfaces from corrosion and water promoted deterioration that is environmentally safe and non-toxic applied in one coat without the use of a primer. The coating contains a tough, flexible polyurethane binder and a corrosion inhibiting pigment.

As indicated above, there is a need in the art for coating compositions that are suitable for preparing solvent borne or 100% solids coatings having improved adhesion, particularly to metal substrates.

### SUMMARY OF THE INVENTION

The present invention is directed to method of direct-to-metal coating using two-component coating compositions that include (A) a first component containing an acid functional aliphatic polyester polyol having an acid number of at least 20 mg KOH/g and a hydroxyl number of from 50 to 500 mg KOH/g, and (B) a second component comprising one or more polyisocyanates.

More specifically the present invention is directed to a method of direct-to-metal coating a metal substrate including (i) mixing components (A) and (B) in the above-described composition to form a mixture; and (ii) applying the mixture to a surface of a metal substrate.

The present invention provides metal substrates coated according to the above-described method.

### DETAILED DESCRIPTION OF THE INVENTION

Other than in the operating examples, or where otherwise indicated, all numbers or expressions referring to quantities of ingredients, reaction conditions, etc. used in the specification and claims are to be understood as modified in all instances by the term "about."

As used herein the term "alkyl" refers to a monovalent radical of an aliphatic hydrocarbon chain of general formula CₛH2ₛ₊₁, where s is the number of carbon atoms, or ranges therefore, as specified.

As used herein the terms "cyclic alkyl" or "cycloalkyl" refer to a monovalent radical of an aliphatic hydrocarbon chain that forms a ring of general formula CₛH2ₛ₋₁, where s is the number of carbon atoms, or ranges therefore, as specified. The term "substituted cycloalkyl" refers to a cycloalkyl group, containing one or more hetero atoms, non-limiting examples being -O-, -NR-, and -S- in the ring structure, and/or where one or more hydrogens are replaced with a non-carbon atom or group, non-limiting examples of such atoms or groups include halides, amines, alcohols, oxygen (such as ketone or aldehyde groups), and thiols. R represents an alkyl group of from 1 to 24 carbon atoms.

As used herein, the term "aryl" refers to a monovalent radical of an aromatic hydrocarbon. Aromatic hydrocarbons include those carbon based cyclic compounds containing conjugated double bonds where 4t+2 electrons are included in the resulting cyclic conjugated pi-orbital system, where t is an integer of at least 1. As used herein, aryl groups can include single aromatic ring structures, one or more fused aromatic ring structures, covalently connected aromatic ring structures, any or all of which can include heteroatoms. Non-limiting examples of such heteroatoms that can be included in aromatic ring structures include O, N, and S.

As used herein, the term "alkylene" refers to acyclic or cyclic divalent hydrocarbons having a carbon chain length of from C₁ (in the case of acyclic) or C₄ (in the case of cyclic) to C₂₅, typically C₂ to C₁₂, which may be substituted or unsubstituted, and which may include substituents. As a non-limiting example, the alkylene groups can be lower alkyl radicals having from 1 to 12 carbon atoms. As a non-limiting illustration, "propylene" is intended to include both n-propylene and isopropylene groups; and, likewise, "butylene" is intended to include both n-butylene, isobutylene, and t-butylene groups.

As used herein, the term "(meth)acrylic" and "(meth)acrylate" are meant to include the corresponding derivatives of acrylic acid and methacrylic acid, without limitation.

As used herein, the term "cure" (or "curing") is intended to include both crosslinking of the adhesive, sealant, or coating composition components and film formation as a result of evaporation of water and, if present, other solvents and diluents along with the development of physical and chemical properties in the resultant film such as bond strength and peel strength.

The present invention provides a two-component coating composition that includes (A) a first component containing an acid functional aliphatic polyester polyol and (B) a second component containing one or more polyisocyanates.

In an embodiment of the invention, the acid functional aliphatic polyester polyol in (A) can have an acid number of at least 20, in some cases at least 25, in other cases at least 35, and in some instances at least 50 mg KOH/g. When the acid functionality is too low, the adhesion to a metal substrate can be less than desired. Also, the acid functional aliphatic polyester polyol in (A) can have an acid number of up to 500, in some cases up to 400 and in other cases up to 250 mg KOH/g. The acid number of the acid functional aliphatic polyester polyol in (A) can be any value and/or can range between any of the values recited above.

In the present invention, it was discovered that when the acid number of the polyester polyol is high, for example at least 20, excellent adhesion and corrosion resistance is observed when the present two-component coating composition is applied in direct-to-metal applications. When the acid number of the polyester polyol is low, for example 3, poor adhesion and corrosion resistance is observed when the present two-component coating composition is applied in direct-to-metal applications. In the cases of low acid number polyester polyols, a primer is required to obtain acceptable adhesion and corrosion resistance.

In an embodiment of the invention, the acid functional aliphatic polyester polyol in (A) can have a hydroxyl number of at least 50, in some cases at least 75 and in other cases at least 100 mg KOH/g. When the hydroxyl functionality is too low, the cure can be less than desired. Also, the acid functional aliphatic polyester polyol in (A) can have a hydroxyl number of up to 500, in some cases up to 400 and in other cases up to 250 mg KOH/g. The hydroxyl number of the acid functional aliphatic polyester polyol in (A) can be any value and/or can range between any of the values recited above.

In an embodiment of the invention, the polyester is prepared by reacting a mixture containing C₄ to C₂₄ aliphatic, alicyclic and/or aromatic polybasic acids and/or their corresponding anhydrides and C₃ to C₂₄ aliphatic, alicyclic and/or aromatic polyhydric alcohols, where at least a portion of the polyhydric alcohols contain one or more acid groups.

In a particular embodiment of the invention, the polybasic acids include, but are not limited to adipic acid, fumaric acid, maleic acid, succinic acid, itaconic acid, azeleic acid, sebacic acid, nonanedioic acid, decanedioic acid, 1,4-cyclohexanedicarboxylic acid, 1,3-cyclohexanedicarboxylic acid, 1,2-cyclohexanedicarboxylic acid, terephthalic acid, dimeric fatty acids, trimeric fatty acids, isophthalic acid, 5-sodiosulpho isophthalic acid, phthalic acid, tetrahydrophthalic acid, trimellitic acid, adipic acid, hexahydrophthalic acid, anhydrides thereof and mixtures thereof.

In a more particular embodiment of the invention, the polybasic acids include, one or more suitable 2,2-bis-(hydroxy-methyl)-alkanecarboxylic acids having at least five carbon atoms are included in the mixture for preparing the polyester. Non-limiting examples of such compounds include 2,2-bis-(hydroxymethyl)-propionic acid and/or dimethylolpropionic acid.

In another particular embodiment of the invention, the polyhydric alcohols include, but are not limited to 1,2-ethanediol, 1,3-propanediol, 1,4-butanediol, 1,6-hexanediol, 2,2-dimethyl-1,3-propanediol, 1,2-cyclohexanediol, 1,3-cyclohexanediol, 1,4-cyclohexanediol, diethylene glycol, dipropylene glycol, bisphenol A, ethoxylated bisphenol A, propoxylated bisphenol A, trimethylolpropane, 1,1,1-tris (hydroxymethyl)ethane, glycerol, bis- trimethylolpropane, pentaerythritol, bis-pentaerythritol, sorbitol, trimethylpentane diol, and mixtures thereof.

In a further particular embodiment of the invention, the polyester is prepared by reacting a mixture containing a) a polyol component containing neopentylglycol, 1,4-cyclohexanedimethanol, ethylene glycol, 1,2- and 1,3-propanediol, 1,3- and 1,4-butanediol, 1,6-hexanediol, trimethylolpropane, glycerol, and/or pentaerythritol, with b) a polycarboxylic acid component containing isophthalic acid, terephthalic acid, phthalic acid, and/or adipic acid and or the anhydrides thereof.

In an embodiment of the invention, the polyester in (A) has a molecular weight (Mn) of at least 300, in some cases at least 500, in other cases at least 1,000 and in some instances at least 2,000. Also, the Mn of the polyester can be up to 10,000, in some cases up to 8.000 and in other cases up to 6,000. The Mn of the polyester can be any value or range between any of the values recited above.

Any suitable polyisocyanate can be used in the invention, such as aliphatic, cycloaliphatic, araliphatic and/or aromatic polyisocyanates containing from 2 to 5 isocyanate groups. Suitable polyisocyanates which can be used to prepare the polyether urethanes in a) are known and include monomeric organic diisocyanates represented by the formula, OCN-R⁷-NCO, in which R⁷ represents an organic group obtained by removing the isocyanate groups from an organic diisocyanate having a molecular weight of 112 to 1,000, in many cases 140 to 400. Non-limiting examples of suitable R⁷ groups include C₂ to C₂₄ linear, branched, and cyclic alkylene, arylene, and aralkylene, which may optionally contain one or more isocyanate groups. In particular embodiments, the diisocyanates are those represented by the above formula in which R⁷ represents a divalent aliphatic hydrocarbon group having from 4 to 18 carbon atoms, a divalent cycloaliphatic hydrocarbon group having from 5 to 15 carbon atoms, a divalent araliphatic hydrocarbon group having from 7 to 15 carbon atoms or a divalent aromatic hydrocarbon group having 6 to 15 carbon atoms.

In an embodiment of the invention, the polyisocyanate can be a suitable prepolymer. Suitable prepolymers of the polyisocyanates include, but are not limited to those that contain one or more groups selected from urethane, urea, uretdione, isocyanurate, allophanate, biuret, iminooxadiazinedione and oxadiazinetrione, In a particular embodiment, the polyisocyanates include prepolymers containing one or more one or more groups selected from biuret, urethane, uretdione, allophanate, isocyanurate, and/or iminooxadiazinedione groups.

In another embodiment of the invention, the aliphatic isocyanates include polyisocyanates based on aliphatic diisocyanates, cycloaliphatic diisocyanates, and/or araliphatic diisocyanates.

In a particular embodiment f the invention, the polyisocyanates can include, but are not limited to one or more polyisocyanates selected from 1,4-diisocyanatobutane, 1,5-diisocyanatopentane, 1,6-diisocyanatohexane, 2-methyl-1,5-diisocyanatopentane, 1,5-diisocyanato-2,2-dimethylpentane, 2,2,4- trimethyl-1,6-diisocyanatohexane, 2,4,4-trimethyl-1,6-diisocyanatohexane, 1,10-diisocyanatodecane, 1,3- diisocyanatocyclohexane, 1,4-diisocyanatocyclohexane, 1,3- bis-(isocyanatomethyl)cyclohexane, 1,4-bis-(isocyanatomethyl)cyclohexane, isophorone diisocyanate, 4,4'-diisocyanatodicyclohexylmethane, triisocyanatononane, ω,ω'-diisocyanato-1,3-dimethylcyclohexane, 1-isocyanato-1-methyl-3-isocyanatomethylcyclohexane, 1-isocyanato-1-methyl-4-isocyanatomethyl-cyclohexane, bis-(isocyanatomethyl)norbornane, 1,5-naphthalene diisocyanate, 1,3- bis-(2-isocyanatoprop-2-yl)benzene, 1,4-bis-(2-isocyanatoprop-2-yl)benzene, 2,4-diisocyanatotoluene, 2,6-diisocyanatotoluene, 2,4'-diisocyanatodiphenylmethane, 4,4'-diisocyanatodiphenylmethane, 1,5-diisocyanatonaphthalene, 1,3-bis(isocyanatomethyl)benzene and mixtures thereof.

Additional suitable isocyanates include, but are not limited to prepolymers of polyisocyanates. In an embodiment of the invention, the prepolymer of aliphatic isocyanates can be the product of an oligomerization reaction of aliphatic diisocyanates. Non-limiting examples of such oligomerization reactions include carbodiimidization, dimerization, trimerization, biuretization, urea formation, urethanization, allophanatization and/or cyclization with the formation of oxadiazine structures.

Non-limiting examples of isocyanurate group-containing polyisocyanates include those prepared as set forth in U.S. Pat. Nos. 4,288,586 and 4,324,879; the pertinent portions of which are herein incorporated by reference. The isocyanato-isocyanurates generally have an average NCO functionality of 3 to 3.5 and an NCO content of 5 to 30%, in some cases 10 to 25% and in other cases 15 to 25% by weight.

Non-limiting examples of uretdione diisocyanates include those prepared by oligomerizing a portion of the isocyanate groups of a diisocyanate in the presence of a suitable catalyst, e.g., a trialkyl phosphine catalyst, and which can be used in admixture with other aliphatic and/or cycloaliphatic polyisocyanates, particularly the isocyanurate group-containing polyisocyanates set forth above.

Non-limiting examples of biuret group-containing polyisocyanates include those prepared according to the processes disclosed in U.S. Pat. Nos. 3,124,605; 3,358,010; 3,644,490; 3,862,973; 3,906,126; 3,903,127; 4,051,165; 4,147,714; or 4,220,749; the pertinent portions of which are herein incorporated by reference, by using co-reactants such as water, tertiary alcohols, primary and secondary monoamines, and primary and/or secondary diamines. These polyisocyanates can have an NCO content of 18 to 22% by weight and an average NCO functionality of from 3 to 3.5.

Non-limiting examples of urethane group-containing polyisocyanates include those prepared in accordance with the process disclosed in U.S. Pat. No. 3,183,112; the pertinent portions of which are herein incorporated by reference, by reacting excess quantities of polyisocyanates, in some cases diisocyanates, with low molecular weight glycols and polyols having molecular weights of less than 400, such as trimethylol propane, glycerine, 1,2-dihydroxy propane and mixtures thereof. The urethane group-containing polyisocyanates can have an NCO content of 12 to 20% by weight and an (average) NCO functionality of 2.5 to 3.

Non-limiting examples of allophanate group-containing polyisocyanates include those prepared according to the processes disclosed in U.S. Pat. Nos. 3,769,318, 4,160,080 and 4,177,342; the pertinent portions of which are herein incorporated by reference. The allophanate group-containing polyisocyanates can have an NCO content of from 12 to 21 % by weight and an (average) NCO functionality of 2 to 4.5.

Non-limiting examples of isocyanurate and allophanate group-containing polyisocyanates include those prepared in accordance with the processes set forth in U.S. Pat. Nos. 5,124,427; 5,208,334; and 5,235,018; the pertinent portions of which are herein incorporated by reference. Such polyisocyanates can contain these groups in a ratio of monoisocyanurate groups to mono-allophanate groups of about 10:1 to 1:10, in some cases about 5:1 to 1:7.

Non-limiting examples of iminooxadiazine dione and optionally isocyanurate group-containing polyisocyanates include those that can be prepared in the presence of special fluorine-containing catalysts as described in U.S. Pat. No. 5,914,383; the pertinent portions of which are herein incorporated by reference. These polyisocyanates generally have an average NCO functionality of 3 to 3.5 and an NCO content of 5 to 30%, in some cases 10 to 25% and in other cases 15 to 25% by weight.

Non-limiting examples of carbodiimide group-containing polyisocyanates include those that are prepared by oligomerizing di- or polyisocyanates in the presence of known carbodiimidization catalysts as described in GB 899,036, and U.S. Pat. Nos. 3,152,162; 4,294,719; 4,088,665; and 4,344,855; the pertinent portions of which are herein incorporated by reference.

Non-limiting examples of polyisocyanates containing oxadiazinetrione groups include those containing the reaction product of two moles of a diisocyanate and one mole of carbon dioxide.

Non-limiting examples of suitable polyisocyanates for use in the present invention include those available under the trade name DESMODUR®, available from Bayer Polymers, Pittsburgh, PA.

In an embodiment of the invention, one or both of component (A) and component (B) further include a non-aqueous solvent. Any suitable non-aqueous solvent can be used in the invention. Suitable solvents include, but are not limited to N-methylpyrrolidone, C₁ to C₈ linear, branched or cyclic alcohols, a non-limiting example being n-butanol, dimethyl(diethyl)glycol, dimethyl(diethyl)diglycol, tetrahydrofuran, dimethyl dipropylene glycol, diethyl dipropylene glycol, dipropylene glycol monomethyl ether, dipropylene glycol monomethyl ether, dimethyl propylene glycol, diethyl propylene glycol, propylene glycol monomethyl ether, propylene glycol monomethyl ether, propylene glycol monomethyl ether acetate, propylene glycol monoethyl ether acetate, ethyl acetate, n-propyl acetate, isopropyl acetate, n-butyl acetate, n-hexyl acetate, n-heptyl acetate, 2-ethylhexyl acetate, methoxypropyl acetate, methyl ethyl ketone, methyl isobutyl ketone, toluene, xylene, white spirits, and mixtures thereof. Solvents are typically used only in the smallest possible amount, if at all, for reasons of environmental compatibility. The amount of solvent typically does not exceed 40 wt.%. In embodiments of the invention, the amount of solvent can be at least 0.1 wt.%, in some cases at least 0.5 wt.% in other cases at least 1 wt.%, and in some instances at least 2 wt.%. In some instances, when the solvent is too low, the viscosity of the coating composition can be too high. Also, the amount of solvent can be up to 40 wt.%, in some cases up to 35 wt.%, in other cases up to 30 wt.%, in some instance up to 25 wt.% in other instances up to 20 wt. %, in some situations up to 15 wt.% and in other situations up to 10 wt.% based on the sum of polyurethane resin and solvent. Viscosity and VOC requirements of the coating composition will often dictate the upper limit for the amount of solvent that can be used. The amount of solvent can be any value recited above or vary between any of the values recited above.

In another embodiment of the invention, one or both of component (A) and component (B) further contain one or more additives selected from leveling agents, wetting agents, flow control agents, antiskinning agents, antifoaming agents, fillers, viscosity regulators, plasticizers, pigments, catalysts, dyes, UV absorbers, light stabilizers, and stabilizers against thermal and oxidative degradation.

Non-limiting examples of plasticizers that can be used in the present invention include dioctyl phthalate (DOP) dibutyl phthalate (DBP); diisodecyl phthalate (DIDP); dioctyl adipate isodecyl malonate; diethylene glycol dibenzoate, pentaerythritol ester; butyl oleate, methyl acetylricinoleate; tricresyl phosphate and trioctyl phosphate; polypropylene glycol adipate and polybutylene glycol adipate; and the like. Such plasticizers can be used alone or in combination of two or more.

Non-limiting examples of catalysts, which may be used for curing, that can be used in the present invention include titanate esters, e.g., those of tetrabutyl titanate and tetrapropyl titanate; organotin compounds, e.g., dibutyl tin dilaurate, dibutyl tin maleate, dibutyl tin diacetate, tin octylate and tin naphthenate; lead octylate; amine-based compounds and salts of these compounds and carboxylates, e.g., butylamine, octylamine, dibutylamine, monoethanolamine, diethanolamine, triethanolamine, diethylenetriamine, triethylenetetramine, oleylamine, octylamine, cyclohexylamine, benzylamine, diethylaminopropylamine, xylylenediamine, triethylenediamine, guanidine, diphenylguanidine, 2,4,6-tris(dimethylaminomethyl) phenol, morpholine, N-methyl morpholine, and 1,3-diazabicyclo(5,4,6) undecene-7 (DBU); low-molecular-weight polyamide resins produced by the reactions between excessive quantities of polyamines and polybasic acids; products of the reactions between excessive quantities of polyamines and epoxy compounds; and known silanol condensing catalysts, e.g., silane coupling agents containing amino group (e.g., γ-aminopropyl trimethoxy silane and N-(β-aminoethyl)aminopropyl methyldimethoxy silane). These compounds may be used either individually or in combination. In an embodiment of the invention, the catalyst includes N,N-dimethylbenzylamine, N-methylmorpholine, zinc octoate, tin(II) octoate, monobutyltin dihydroxychloride, and/or dibutyltin dilaurate.

Non-limiting examples of leveling agents that can be used in the present invention include cellulose, e.g., nitrocellulose and cellulose acetate butyrate.

Non-limiting examples of wetting agents that can be used in the present invention include glycols, silanes, anionic surfactants, and any other wetting agents known in the art. A non-limiting example of wetting agents and dispersants that can be used in the present invention include those available under the trade name DISPERBYK®, available from Byk Chemie, Wallingford, CT.

Non-limiting examples of flow control agents, that can be used in the present invention include polyacrylic esters, non-ionic fluorinated alkyl ester surfactants, non-ionic alkylarylpolyether alcohols, silicones, and the like, as well as those available under the trade name RESIFLOW® by Estron Chemical, Inc., Parsippany, NJ, those sold under the trade name Benzoin® by DSM, Inc., ; those available under the trade name MODAFLOW® from Monsanto and those available under the trade name SURFYNOL® available from Air Products, Bethlehem, PA.

Non-limiting examples of antifoaming agents that can be used in the present invention include those available as FOAMEX® from Rohm and Haas Company, Philadelphia, PA, those available under the trade name BYK®, available from BYK-Chemie USA, Wallingford, CT, and those available under the trade name FoamBrake® from BASF Corp., Mount Olive, NJ.

Non-limiting examples of fillers include fumed silica, settling silica, silicic anhydride, silicic hydrate, talc, limestone powder, kaolin, diatomaceous earth, fired clay, clay, bentonite, organic bentonite, zinc oxide, activated zinc white, and fibrous fillers such as glass fibers or filaments. The filler can have any suitable particle size, in an embodiment of the invention, the filler particle size can be from 5 nm to 10 µm, in some cases 10 nm to 5 µm, and in other cases from 25 nm to 1 µm.

Non-limiting examples of viscosity regulators that can be used in the present invention include alkali-soluble, acid-soluble, and hydrophobically-modified alkali-soluble or acid-soluble emulsion polymers, those available as ACRYSOL® from Rohm and Haas Company, cellulosics, modified cellulosics, natural gums, such as xanthan gum, and the like. Included as viscosity regulators are polymers and dispersing aids that provide for high pigment loads at low viscosity, such as BYK® 410, BYK-Chemie Gmbh, Wesel, Germany.

Non-limiting examples of pigments, that can be used in the present invention include carbon black, titanium dioxide, calcium carbonate, iron oxide, aluminum trihydroxide, mica, calcium metasilicate, silica and magnesium carbonate.

Non-limiting examples of dyes that can be used in the present invention include mordant dyes, i.e., dyes prepared from plants, insects, and algae, and direct dyes, non-limiting examples being those based on benzidine or benzidine derivatives.

Non-limiting examples of ultra violet light absorbers that can be used in the present invention include benzotriazole-based ultra violet ray absorbers, salicylate-based ultraviolet ray absorbers, benzophenone-based ultraviolet ray absorbers, hindered amine-based light stabilizers and nickel-based light stabilizers. In a particular embodiment of the invention, hindered amine-based light stabilizers are used, such as those available under the trade name TINUVIN® from Ciba Specialty Chemicals, Basel, Switzerland.

Non-limiting examples of thermal stabilizers that can be used in the present invention include HCl scavengers, a non-limiting example being epoxidized soybean oil, esters of beta-thiodipropionic acid, non-limiting examples being lauryl, stearyl, myristyl or tridecyl esters, mercaptobenzimidazole, the zinc salt of 2-mercaptobenzimidazole, zinc dibutyl-dithiocarbamate, dioctadecyl disulfide, pentaerythritol tetrakis-(beta-dodecylmercapto)-propionate, and lead phosphate.

Non-limiting examples of antioxidants that can be used in the present invention include 2,6-di-t-butyl phenol, 2,4-di-t-butyl phenol, 2,6-dit-butyl-4-methyl phenol, 2,5-di-t-butylhydroquinone, n-octadecyl-3-(3,5-di-t-butyl-4-hydro- xyphenyl)propionate, pentaerythrityl-tetrakis[3-(3,5-di-t-butyl-4-hydroxyp- henyl) propionate], 2,2'-methylenebis(4-methyl-6-t-butyl phenol), 4,4'-butylidenebis(3-methyl-6-t-butyl phenol), 4,4'-thiobis(3-methyl-6- -t-butyl phenol), N,N'-diphenyl-p-phenylenediamine, 6-ethoxy-2,2,4-trimethyl-1,2- -dihydroquinoline and the antioxidants available under the trade name IRGANOX® from Ciba Specialty Chemicals, Basel, Switzerland.

The present invention is also directed to a method of coating a metal substrate that includes
(i) mixing components (A) and (B) as described above to form a mixture; and
(ii) applying the mixture to a surface of a metal substrate; as well as coated metal substrates prepared by the above-described method.

In an embodiment of the invention, the metal substrate is substantially free of primer coatings or surface treatments. In this instance "substantially free" indicates that the metal substrate is free of coating layers or surface modifiers applied prior to the above-described mixture. Typically, in this embodiment, bare metal is used, that contains only substances incident to its manufacture and processing are included on the surface and not materials that are intended to promote the adhesion of the mixture to the metal substrate.

In another particular embodiment, the metal includes a steel alloy or aluminum alloy.

The mixture can be applied by conventional means including spraying, pouring, flowcoating, brushing, squirting or rolling, as is known in the art.

Upon application to a substrate, the composition is allowed to coalesce to form a substantially continuous film on the,substrate, which can then be cured. The film can be formed on the surface of the substrate by driving off liquids out of the film by heating or by an air drying period.

The mixture can have a total solids content of from 20 to 95 wt.%, in some cases from 35 to 85 wt.%, and in other cases from 40 to 75 wt.%. The applied coating can be cured at ambient temperatures or it can be heated to temperatures of from 100°C to 200°C, and in some cases 120°C to 160°C to cure the surface films applied. The curing time can be from 1 to 120 minutes, in some cases from10 to 60 minutes, and in other cases from 15 to 45 minutes depending on the composition and the temperature.

The present invention is more particularly described in the following examples, which are intended to be illustrative only, since numerous modifications and variations therein will be apparent to those skilled in the art. Unless otherwise specified, all parts and percentages are by weight.

### Example 1

A 5-I flask fitted with a takeoff condenser, agitator, nitrogen inlet and heat source was used to react the components in the following table. The mixture of components was heated to about 200°C over a two hour period. At about 190°C, distillate began to be collected. The temperature was maintained at about 200°C for three hours, continuously collecting distillate. The resulting polyester was cooled to about 50°C when n-butyl acetate was added to dissolve the polyester, which was thereafter cooled to ambient temperature. The properties of the resulting solutions are listed in the following table.

Viscosities were measured using a Brookfield® CAP 2000 Digital Viscometer, Brookfield Engineering, Inc., Middleboro, MA, using appropriate spindles at the indicated temperature. The percent solids was calculated based on the particular formulation. The acid value was determined as the number of mg of potassium hydroxide required to neutralize the acid groups in 1 g of material.

| Ingredient | A | B | C | D | E |
|---|---|---|---|---|---|
| Adipic acid (g) | 774 | 640 | 1796 | 774 | 642 |
| Isophthalic acid (g) | 990 | 792 | -- | 1080 | 896 |
| Phthalic anhydride (g) | 140 | 112 | -- | 68 | 56 |
| Neopentyl glycol (g) | 1358 | 1086 | 1358 | 1358 | 1225 |
| Dimethylol propionoic acid (g) | 938 | 750 | 938 | 938 | 778 |
| Monobutyl tin dihydroxychloride (g) | 0.74 | 0.60 | 0.74 | 0.74 | 0.61 |
| Water of reaction (g) | 429 | 343 | 614 | 548 | 538 |
| Yield (g) | 3771 | 3016 | 3478 | 3670 | 3582 |
| Resin viscosity at 100°C (cps) | 5,030 | 5300 | 4100 | 5500 | -- |
| OH value (mg KOH/g) | 179 | 212 | 200 | 163 | 160.6 |
| Acid number (mg KOH/g) | 50.1 | 50.5 | 50.5 | 51.5 | 26.8 |
| n-Butyl acetate (g) | 0 | 754 | 938 | 920 | 760 |
| Solids (wt.%) | 100 | 80 | 80 | 80 | 80 |
| Solution viscosity at 25°C (cps) | -- | 9000 | 1620 | 8800 | 4800 |

### Example 2

Paint formulations were prepared individually containing resins A through E from example 1. The paints were prepared roughly according to the following formula making minor adjustments for equivalent weight (1.1:1 or 1.3:1 NCO:OH as indicated) and total resin solids. Pigment to binder (w/w) ratio was 0.8:1 for R-960 and 0.3:1 for yellow.

### Component 1

- 322g: Resin, Example 1, A through E
- 16.6g: DISPERBYK® 110, Byk Chemie, Wallingford, CT
- 329g: Pigment R-960 (TiO₂, DuPont)
- 3.6g: BAYSILONE® OL-17, Lanxess, Pittsburgh, PA
- 82g: n-butyl acetate
- 0.14g: DABCO® T-12, Air Products, Lehigh Valley, PA

### Component 2

- 182g: DESMODUR® N-851, Bayer Polymers, Pittsburgh, PA
- 167g: Propyleneglycol monomethyl ether acetate (PM acetate)

### Examples 3-11

The paint formulations were applied to test panels and evaluated according to the following procedure:
1. 4"x12" untreated cold rolled steel panels (S-412 from Q-Panel Products, Cleveland, Ohio) were cleaned with methyl ethyl ketone and allowed to dry.
2. The paint compositions were applied by conventional spray.
3. The panels were dried at ambient conditions for about one hour, after which time they were tack-free.
4. The panels were then baked at 121 °C for 30 minutes.
5. The panels were then scribed using a utility knife, approximately 25cm long from top right to bottom left and duct tape was applied around the edges.
6. Salt fog testing was then conducted according to ASTM D 1654.

| Example | Resin | Pigment | Creep at 24hrs (mm) | Creep at 96hrs (mm) |
|---|---|---|---|---|
| 3 | A | R-960 | <1 | 2 |
| 4 | B | R-960 | 1 | 3 |
| 5 | B | Yellow³ | 1.5 | 3.5 |
| 6 | C | R-960 | 1.5 | 4 |
| 7 | C | R-960 | 1.5 | 4 |
| 8 | D | Yellow³ | 2 | 4 |
| 9 | D | R-960 | 2 | 2.5 |
| 10 (comp.) | DESMOPHEN® 650A-65¹ | R-960 | 2 | 8 |
| 11 (comp.) | DESMOPHEN® XP 7116² | R-960 | -- | 7.6 |

| | | | | |
|---|---|---|---|---|
| ¹ Acid No. - 3 mg KOH/g max, Bayer Polymers, Pittsburgh, PA | | | | |
| ² Acid No. - 10 mg KOH/g, Bayer Polymers, Pittsburgh, PA | | | | |
| ³ mixture of R-960, NOVOPERM® HR-70 (Clariant International) and iron oxide | | | | |

The coatings of examples 3 through 9 all had excellent adhesion to the steel panels, even though no corrosion inhibitor, for example zinc phosphate, was used as is used in other typical direct-to-metal paints. The results of the fog testing show that the coatings based on high acid number polyester polyols had better corrosion resistance as evidenced by the small amount of under-rusting creepage as compared to comparative examples 10 and 11.

### Examples 12

The coating of example 3 was used to coat iron phosphate treated cold rolled steel panels, BONDERITE® B-1000 (ACT Laboratories Inc.). The paint formulation was applied as indicated above and gave a salt fog result (ASTM D 1654) of 3mm creepage after 1,000 hours.

### Examples 13

The coating of example 3 was used to coat zinc phosphate treated cold rolled steel panels, BONDERITE® B-952 (ACT Laboratories Inc.). The paint formulation was applied as indicated above and gave a salt fog result (ASTM D 1654) of 1 mm creepage after 2,400 hours.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A method of direct-to-metal coating a metal substrate comprising:
(i) mixing
(A) a first component comprising an acid functional aliphatic polyester polyol having an acid number of at least 20 mg KOH/g and a hydroxyl number of from 50 to 500 mg KOH/g, and
(B) a second component comprising one or more polyisocyanates
and
(ii) applying the mixture to a surface of a metal substrate.

2. The method according to Claim 1, wherein the polyester is prepared by reacting a mixture comprising C₄ to C₂₄ aliphatic, alicyclic and/or aromatic polybasic acids and/or their corresponding anhydrides and C₃ to C₂₄ aliphatic, alicyclic and/or aromatic polyhydric alcohols, wherein at least a portion of the polyhydric alcohols contain one or more acid groups.

3. The method according to Claim 2, wherein the polybasic acids are selected from the group consisting of adipic acid, fumaric acid, maleic acid, succinic acid, itaconic acid, azeleic acid, sebacic acid, nonanedioic acid, decanedioic acid, 1,4-cyclohexanedicarboxylic acid, 1,3-cyclohexanedicarboxylic acid, 1,2-cyclohexanedicarboxylic acid, terephthalic acid, dimeric fatty acids, trimeric fatty acids, isophthalic acid, 5-sodiosulpho isophthalic acid, phthalic acid, tetrahydrophthalic acid, trimellitic acid; adipic acid, hexahydrophthalic acid, anhydrides thereof and mixtures thereof.

4. The method according to Claim 2, wherein the polyhydric alcohols are selected from the group consisting of 1,2-ethanediol, 1,3-propanediol, 1,4-butanediol, 1,6-hexanediol, 2,2-dimethyl-1,3-propanediol, 1,2-cyclohexanediol, 1,3-cyclohexanediol, 1,4-cyclohexanediol, diethylene glycol, dipropylene glycol, bisphenol A, ethoxylated bisphenol A, propoxylated bisphenol A, trimethylolpropane, 1,1,1-tris (hydroxymethyl)ethane, glycerol, bis- trimethylolpropane, pentaerythritol, bis-pentaerythritol, sorbitol, trimethylpentane diol, and mixtures thereof.

5. The method according to Claim 2, wherein one or more 2,2-bis-(hydroxy-methyl)-alkanecarboxylic acids having at least five carbon atoms are included in the mixture for preparing the polyester.

6. The method according to Claim 5, wherein the 2,2-bis-(hydroxy-methyl)-alkanecarboxylic acids include 2,2-bis-(hydroxymethyl)-propionic acid and/or dimethylolpropionic acid.

7. The method according to Claim 1, wherein the polyester in (A) has a molecular weight (Mn) of from 300 to 10,000, an acid number of at least 25 mg KOH/g and a hydroxyl number of from 100 to 250 mg KOH/g.

8. The method according to Claim 1, wherein the polyisocyanates comprise aliphatic, cycloaliphatic, araliphatic and/or aromatic polyisocyanates containing from 2 to 5 isocyanate groups.

9. The method according to Claim 1, wherein the polyisocyanates include one or more polyisocyanates selected from the group consisting of 1,4-diisocyanatobutane, 1,5-diisocyanatopentane, 1,6-diisocyanatohexane, 2-methyl-1,5-diisocyanatopentane, 1,5-diisocyanato-2,2-dimethylpentane, 2,2,4- trimethyl-1,6-diisocyanatohexane, 2,4,4-trimethyl-1,6-diisocyanatohexane, 1,10-diisocyanatodecane, 1,3-diisocyanatocyclohexane, 1,4-diisocyanatocyclohexane, 1,3- bis-(isocyanatomethyl)cyclohexane, 1,4-bis-(isocyanatomethyl)cyclohexane, isophorone diisocyanate, 4,4'-diisocyanatodicyclohexylmethane, triisocyanatononane, ω,ω'-diisocyanato-1,3-dimethylcyclohexane, 1-isocyanato-1-methyl-3-isocyanatomethylcyclohexane, 1-isocyanato-1-methyl-4-isocyanatomethylcyclohexane, bis-(isocyanatomethyl)no-bornane, 1,5-naphthalene diisocyanate, 1,3- bis-(2-isocyanatoprop-2-yl)benzene, 1,4-bis-(2-isocyanatoprop-2-yl)benzene, 2,4-diisocyanatotoluene, 2,6-diisocyanatotoluene, 2,4'-diisocyanatodiphenylmethane, 4,4'-diisocyanatodiphenylmethane, 1,5-diisocyanatonaphthalene, 1,3-bis(isocyanatomethyl)benzene and mixtures thereof.

10. The method according to Claim 1, wherein the polyisocyanates include one or more polyisocyanate adducts containing biuret, urethane, uretdione, allophanate, isocyanurate, and/or iminooxadiazinedione groups.

11. The method according to Claim 1, wherein one or both of component (A) and component (B) further comprise a non-aqueous solvent.

12. The method according to Claim 11, wherein the solvent includes one or more compounds selected from the group consisting of N-methyl pyrrolidone, C₁ to C₈ linear, branched or cyclic alcohols, dimethyl glycol, dimethyl diglycol, diethyl glycol, diethyl diglycol, tetrahydrofuran, dimethyl dipropylene glycol, diethyl dipropylene glycol, dipropylene glycol monomethyl ether, dipropylene glycol monoethyl ether, dimethyl propylene glycol, diethyl propylene glycol, propylene glycol monomethyl ether, propylene glycol monoethyl ether, propylene glycol monomethyl ether acetate, propylene glycol monoethyl ether acetate, ethyl acetate, n-propyl acetate, isopropyl acetate, n-butyl acetate, n-hexyl acetate, n-heptyl acetate, 2-ethylhexyl acetate, methoxypropyl acetate, methyl ethyl ketone, methyl isobutyl ketone, toluene, xylene, white spirits, and mixtures thereof.

13. The method according to Claim 1, wherein one or both of component (A) and component (B) further comprises one or more additives selected from the group consisting of leveling agents, wetting agents, flow control agents, antiskinning agents, antifoaming agents, fillers, viscosity regulators, plasticizers, pigments, catalysts, dyes, UV absorbers, light stabilizers, and stabilizers against thermal and oxidative degradation.

14. The method according to Claim 13, wherein the catalyst includes N,N-dimethylbenzylamine, N-methylmorpholine, zinc octoate, tin(II) octoate, monobutyltin dihydroxychloride, and/or dibutyltin dilaurate.

15. The method according to Claim 1, wherein the metal substrate is substantially free of primer coatings or surface treatments

16. The method according to Claim 1, wherein the mixture is applied by spraying, pouring, flowcoating, brushing, squirting or rolling.

17. The method according to Claim 1, wherein the metal comprises a steel alloy or aluminum alloy.

18. A coated metal substrate prepared according to the method of Claim 1.

19. The coated metal substrate according to Claim 18, wherein the metal is steel or aluminum.

20. Use of a two-component coating composition comprising:
(A) a first component comprising an acid functional aliphatic polyester polyol having an acid number of at least 20 mg KOH/g and a hydroxyl number of from 50 to 500 mg KOH/g, and
(B) a second component comprising one or more polyisocyanates
for direct-to-metal coating a metal substrate

21. The use according to Claim 20, wherein the polyester polyol is prepared by reacting a mixture comprising C₄ to C₂₄ aliphatic, alicyclic and/or aromatic polybasic acids and/or their corresponding anhydrides and C₃ to C₂₄ aliphatic, alicyclic and/or aromatic polyhydric alcohols, wherein at least a portion of the polyhydric alcohols contain one or more acid groups.

22. The use according to Claim 21, wherein the polybasic acids are selected from the group consisting of adipic acid, fumaric acid, maleic acid, succinic acid, itaconic acid, azeleic acid, sebacic acid, nonanedioic acid, decanedioic acid, 1,4-cyclohexanedicarboxylic acid, 1,3-cyclohexanedicarboxylic acid, 1,2-cyclohexanedicarboxylic acid, terephthalic acid, dimeric fatty acids, trimeric fatty acids, isophthalic acid, 5-sodiosulpho isophthalic acid, phthalic acid, tetrahydrophthalic acid, trimellitic acid, adipic acid, hexahydrophthalic acid, anhydrides thereof and mixtures thereof.

23. The use according to Claim 21, wherein the polyhydric alcohols are selected from the group consisting of 1,2-ethanediol, 1,3-propanediol, 1,4-butanediol, 1,6-hexanediol, 2,2-dimethyl-1,3-propanediol, 1.,2-cyclohexanediol, 1,3-cyclohexanediol, 1,4-cyclohexanediol, diethylene glycol, dipropylene glycol, bisphenol A, ethoxylated bisphenol A, propoxylated bisphenol A, trimethylolpropane, 1,1,1-tris (hydroxymethyl)-ethane, glycerol, bis- trimethylolpropane, pentaerythritol, bis-pentaerythritol, sorbitol, trimethylpentane diol, and mixtures thereof.

24. The use according to Claim 21, wherein one or more 2,2-bis-(hydroxy-methyl)-alkanecarboxylic acids having at least five carbon atoms are included in the mixture for preparing the polyester.

25. The use according to Claim 24, wherein the 2,2-bis-(hydroxymethyl)-alkanecarboxylic acids include 2,2-bis-(hydroxymethyl)-propionic acid and/or dimethylolpropionic acid.

26. The use according to Claim 20, wherein the polyester in (A) has a molecular weight (Mn) of from 300 to 10,000, an acid number of at least 25 mg KOH/g and a hydroxyl number of from 100 to 250 mg KOH/g.

27. The use according to Claim 20, wherein the polyisocyanates comprise aliphatic, cycloaliphatic, araliphatic and/or aromatic polyisocyanates containing from 2 to 5 isocyanate groups.

28. The use according to Claim 20, wherein the polyisocyanates include one or more polyisocyanates selected from the group consisting of 1,4-diisocyanatobutane, 1,5-diisocyanatopentane, 1,6-diisocyanatohexane, 2-methyl-1,5-diisocyanatopentane, 1,5-diisocyanato-2,2-dimethylpentane, 2,2,4- trimethyl-1,6-diisocyanatohexane, 2,4,4-trimethyl-1,6-diisocyanatohexane, 1,10-diisocyanatodecane, 1,3-diisocyanatocyclohexane, 1,4-diisocyanatocyclohexane, 1,3- bis-(isocyanatomethyl)cyclohexane, 1,4-bis-(isocyanatomethyl)cyclohexane, isophorone diisocyanate, 4,4'-diisocyanatodicyclohexylmethane, triisocyanatononane, ω,ω'-diisocyanato-1,3-dimethylcyclohexane, 1-isocyanato-1-methyl-3-isocyanatomethylcyclohexane, 1-isocyanato-1-methyl-4-isocyanatomethylcyclohexane, bis-(isocyanatomethyl)no-bornane, 1,5-naphthalene diisocyanate, 1,3- bis-(2-isocyanatoprop-2-yl)benzene, 1,4-bis-(2-isocyanatoprop-2-yl)benzene, 2,4-diisocyanatotoluene, 2,6-diisocyanatotoluene, 2,4'-diisocyanatodiphenylmethane, 4,4'-diisocyanatodiphenylmethane, 1,5-diisocyanatonaphthalene, 1,3-bis(isocyanatomethyl)benzene and mixtures thereof.

29. The use according to Claim 20, wherein the polyisocyanates include one or more polyisocyanate adducts containing biuret, urethane, uretdione, allophanate, isocyanurate, and/or iminooxadiazinedione groups.

30. The use according to Claim 20, wherein one or both of component (A) and component (B) further comprise a non-aqueous solvent.

31. The use according to Claim 30, wherein the solvent includes one or more compounds selected from the group consisting of N-methyl pyrrolidone, C₁ to C₈ linear, branched or cyclic alcohols, dimethyl glycol, dimethyl diglycol, diethyl glycol, diethyl diglycol, tetrahydrofuran, dimethyl dipropylene glycol, diethyl dipropylene glycol, dipropylene glycol monomethyl ether, dipropylene glycol monoethyl ether, dimethyl propylene glycol, diethyl propylene glycol, propylene glycol monomethyl ether, propylene glycol monoethyl ether, propylene glycol monomethyl ether acetate, propylene glycol monoethyl ether acetate, ethyl acetate, n-propyl acetate, isopropyl acetate, n-butyl acetate, n-hexyl acetate, n-heptyl acetate, 2-ethylhexyl acetate, methoxypropyl acetate, methyl ethyl ketone, methyl isobutyl ketone, toluene, xylene, white spirits, and mixtures thereof.

32. The use according to Claim 20, wherein one or both of component (A) and component (B) further comprises one or more additives selected from the group consisting of leveling agents, wetting agents, flow control agents, antiskinning agents, antifoaming agents, fillers, viscosity regulators, plasticizers, pigments, catalysts, dyes, UV absorbers, light stabilizers, and stabilizers against thermal and oxidative degradation.

33. The use according to Claim 32, wherein the catalyst includes N,N-dimethylbenzylamine, N-methylmorpholine, zinc octoate, tin(II) octoate, monobutyltin dihydroxychloride, and/or dibutyltin dilaurate.
